# EUROPEAN PATENT APPLICATION

(11) **EP 3 680 735 A1**
(43) Date of publication of application: **15.07.2020**
(21) Application number: 18850122.5
(22) Date of filing: 29.08.2018
(51) Int. Cl.: G05B 19/042, A24F 47/00

(54) **ELECTRONIC CIGARETTE CONTROL METHOD AND DEVICE, AND ELECTRONIC CIGARETTE**

(30) Priority: 04.09.2017 CN 201710787858
(71) Applicant: Changzhou Jwei Intelligent Technology Co., Ltd., Changzhou, Jiangsu 213125 (CN); Joyetech Europe Holding GmbH, 6303 Zug (CH)
(72) Inventor: QIU, Weihua, Jiangsu 213125 (CN); WANG, Zhongzhou, Jiangsu 213125 (CN)
(74) Representative: Zaboliene, Reda
(86) International application number: PCT/CN2018/102943
(87) International publication number: WO 2019/042315

(57) **Abstract**

The present invention relates to the technical field of electronics, and provides an electronic cigarette control method and device, and an electronic cigarette. The method is applied to the electronic cigarette. The method comprises: if detecting that an atomizer starts to work, detecting whether the working state of the atomizer satisfies a preset condition or not (101); the atomizer is used for atomizing aerosol in an electronic cigarette to form a matrix, and the preset condition comprises: the working duration of the atomizer at this time reaches a first preset duration, or the number of working times of the atomizer in a preset time period is greater than or equal to a preset number of times; and if the working state of the atomizer satisfies the preset condition, controlling the atomizer to stop working (102). According to the present invention, by controlling the atomizer to stop working if the working state of the atomizer satisfies the preset condition, a user is prevented from continuing smoking the electronic cigarette, so that the automatic control of the electronic cigarette is achieved, and the control efficiency is improved, and moreover, the electronic cigarette can effectively help the user to quit smoking.

## Description

### TECHNICAL FIELD

The present invention relates to the technical field of electronic technology, and in particular, to an electronic cigarette control method, an electronic cigarette control device, and an electronic cigarette.

### BACKGROUND

An electronic cigarette is an electronic product that imitates paper cigarettes. It turns the aerosol-forming substrate into steam through an atomizer for users to inhale. Users can use electronic cigarettes instead of paper cigarettes to quit smoking. With the rapid development of electronic technology, the functions of electronic cigarettes are gradually perfected, and users can be given different experiences through the control of electronic cigarettes.

In related technology, if a user wants to smoke an electronic cigarette, the user can press the button of the electronic cigarette to light the electronic cigarette, and if the user wants to stop smoking the electronic cigarette for health reasons, the user can also press the same button to stop smoking. However, in the process of controlling the electronic cigarette, whether or not the cigarette is lit by the user is actually controlled manually by the user according to his or her own wishes, which results in inconvenient control of the electronic cigarette and low control efficiency.

### SUMMARY

In order to solve the problem that electronic cigarettes cannot effectively help users quit smoking in the related art, embodiments of the present invention provide an electronic cigarette control method, an electronic cigarette control device, and an electronic cigarette. The technical solution is as follows:

According to a first aspect of the embodiments of the present invention, an electronic cigarette control method is provided, which is applied to an electronic cigarette. The method includes:
when it is detected that an atomizer starts to work, detecting whether the working state of the atomizer meets a preset condition, wherein the atomizer is configured to atomize an aerosol-forming substrate in the electronic cigarette, and the preset condition includes: the working time of the atomizer reaches a first preset duration, or the number of times the atomizer works within a preset time period is greater than or equal to a preset number of working times; and
if the working state of the atomizer meets the preset condition, controlling the atomizer to stop working.

Optionally, the preset condition includes that the working time of the atomizer reaches the first preset duration; and detecting whether the working state of the atomizer meets the preset condition includes:
detect whether the working time of the atomizer reaches the first preset duration when a suction action occurs within a second preset duration after the atomizer starts to work, wherein the second preset duration is shorter than the first preset duration.

Optionally, after detecting whether the working time of the atomizer reaches the first preset duration, the method further includes:
when the working time of the atomizer does not reach the first preset duration, controlling the atomizer to stop working while keeping the electronic cigarette turned on if no suction action occurs.

Optionally, if the working state of the atomizer meets the preset condition, controlling the atomizer to stop working includes:
if no suction action occurs, controlling the electronic cigarette to be turned off when the working time of the atomizer reaches the first preset duration; and
if a suction action occurs, determining the time difference between the moment when the atomizer starts to work and the moment when the suction action occurs, and when the working time of the atomizer is greater than or equal to the sum of the first preset duration and the time difference, controlling the electronic cigarette to be turned off.

Optionally, the preset condition includes that the working time of the atomizer reaches the first preset duration; and if the working state of the atomizer meets the preset condition, controlling the atomizer to stop working includes:
determining the number of times the atomizer works within a preset time period when the working time reaches the first preset duration;
controlling the electronic cigarette to be turned off when the number of times the atomizer works is greater than or equal to a preset number of working times; and
controlling the atomizer to stop working while keeping the electronic cigarette turned on when the number of times the atomizer works is less than the preset number of working times.

Optionally, the preset condition includes that the number of times the atomizer works within the preset time period is greater than or equal to the preset number of working times; and detecting the whether the working state meets the preset condition includes:
when a suction action occurs within a third preset duration after the atomizer starts to work, detecting whether the number of times the atomizer works within the preset time period is greater than or equal to the preset number of working times.

Optionally, after controlling the atomizer to stop working, the method further includes:
discarding the cigarette lighting instruction when a cigarette lighting instruction is received within a fourth preset duration after the atomizer stops working; or
displaying a smoking cessation prompt message when a cigarette lighting instruction is received within a fourth preset duration after the atomizer stops working, and controlling the atomizer to start work when a confirmation operation is received based on the smoking cessation prompt message.

According to a second aspect of the embodiments of the present invention, an electronic cigarette control device is provided, which is applied to an electronic cigarette. The device includes:
a detection module, configured to detect whether the working state of the atomizer meets a preset condition when it is detected that the atomizer starts to work, wherein the atomizer is used to atomize an aerosol-forming substrate in the electronic cigarette, and the preset condition includes: the working time of the atomizer reaches a first preset duration, or the number of times the atomizer works within a preset time period is greater than or equal to a preset number of working times;
a first control module, configured to control the atomizer to stop working if the working state of the atomizer meets the preset condition.

Optionally, the preset condition includes that the working time of the atomizer reaches the first preset duration; and the detection module includes:
a first detection sub-module, configured to detect whether the working time of the atomizer reaches the first preset duration when a suction action occurs within a second preset duration after the atomizer starts to work, wherein the second preset duration is shorter than the first preset duration.

Optionally, the device further includes:
second control module, configured to, when the working time of the atomizer does not reach the first preset duration, control the atomizer to stop working while keeping the electronic cigarette turned on if no suction action occurs.

Optionally, the preset condition includes that the working time of the atomizer reaches the first preset duration; and the first control module includes:
a first control sub-module, configured to: if no suction action occurs, control the electronic cigarette to be turned off when the working time of the atomizer reaches the first preset duration; if a suction action occurs, determine the time difference between the moment when the atomizer starts to work and the moment when the suction action occurs, and when the working time of the atomizer is greater than or equal to the sum of the first preset duration and the time difference, control the electronic cigarette to be turned off.

Optionally, the preset condition includes that the working time of the atomizer reaches the first preset duration; and the first control module includes:
a determining sub-module, configured to determine the number of times the atomizer works within the preset time period when the working time reaches the first preset duration;
a second control sub-module, configured to control the electronic cigarette to be turned off when the number of times the atomizer works is greater than or equal to the preset number of working times; and
a third control sub-module, configured to control the atomizer to stop working while keeping the electronic cigarette turned on when the number of times the atomizer works is less than the preset number of working times.

Optionally, the preset condition includes that the number of times the atomizer works within the preset time period is greater than or equal to the preset number of working times; and the detection module includes:
a second detection sub-module, configured to, when a suction action occurs within a third preset duration after the atomizer starts to work, detect whether the number of times the atomizer works within the preset time period is greater than or equal to the preset number of working times.

Optionally, the device further includes:
a discarding module, configured to discard the cigarette lighting instruction when a cigarette lighting instruction is received within a fourth preset duration after the atomizer stops working; or,
a third control module, configured to display a smoking cessation prompt message when a cigarette lighting instruction is received within a fourth preset duration after the atomizer stops working, and control the atomizer to start work when a confirmation operation is received based on the smoking cessation prompt message.

According to a third aspect of the embodiments of the present invention, an electronic cigarette is provided, and the electronic cigarette includes the electronic cigarette control device according to the second aspect.

The technical solution provided by the embodiments of the present invention has the technical effects as follows: when it is detected that the atomizer starts to work, it means that the user is going to smoke the electronic cigarette. Therefore, by detecting whether the working state of the atomizer meets a preset condition, it can monitor whether the user has smoked for a long time or a number of times. When the working state of the atomizer meets the preset condition, it means that the user has smoked for a long time or a number of times. Therefore, the atomizer can be controlled to stop working to prevent the user from continuing to smoke the electronic cigarette, so that not only the automatic control of the electronic cigarette is realized and the control efficiency is improved, but also the electronic cigarette can effectively help the user to quit smoking.

### BRIEF DESCRIPTION OF THE DRAWINGS

In order to more clearly illustrate the technical solutions in the embodiments of the present disclosure, the drawings used in the description of the embodiments are briefly described below. It is obvious that the drawings in the following description are only some embodiments of the present disclosure. For those of ordinary skill in the art, other drawings may also be obtained in light of these drawings without any creative efforts.

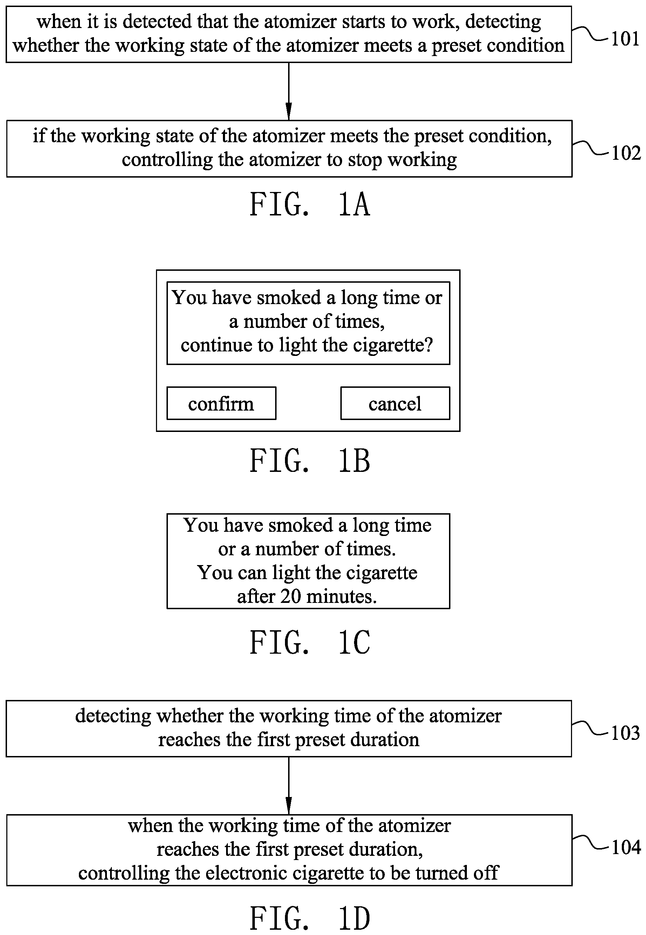

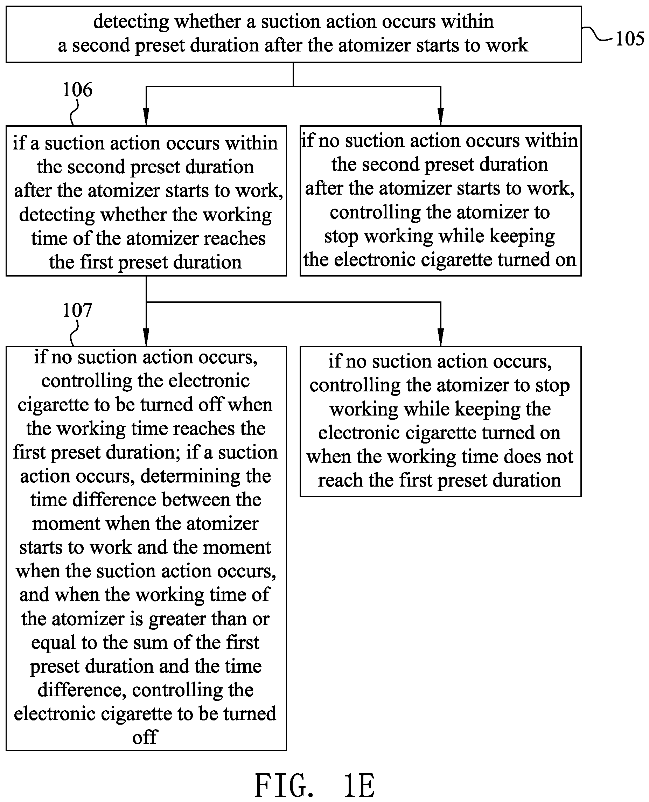

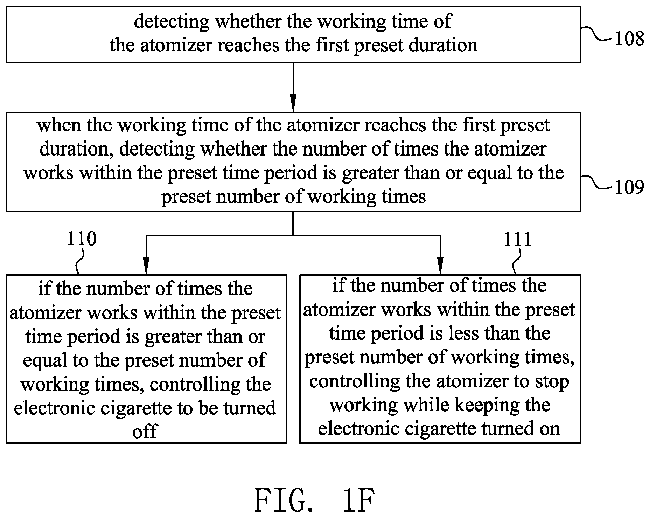

FIG. 1A is a flowchart of the first electronic cigarette control method in an embodiment of the present invention.
FIG. 1B is a schematic diagram of the smoking cessation prompt message in an embodiment of the present invention.
FIG. 1C is a schematic diagram of the time prompt message in an embodiment of the present invention.
FIG. ID is a flowchart of the second electronic cigarette control method in an embodiment of the present invention.
FIG. IE is a flowchart of the third electronic cigarette control method in an embodiment of the present invention.
FIG. IF is a flowchart of the fourth electronic cigarette control method in an embodiment of the present invention.
FIG. 1G is a flowchart of the fifth electronic cigarette control method in an embodiment of the present invention.
FIG. 1H is a flowchart of the sixth electronic cigarette control method in an embodiment of the present invention.
FIG. 1I is a flowchart of the seventh electronic cigarette control method in an embodiment of the present invention.
FIG. 2A is a schematic structural diagram of the first electronic cigarette control device in an embodiment of the present invention.
FIG. 2B is a schematic structural diagram of the detection module according to a first example in an embodiment of the present invention.
FIG. 2C is a schematic structural diagram of the second electronic cigarette control device in an embodiment of the present invention.
FIG. 2D is a schematic structural diagram of the first control module according to a first example in an embodiment of the present invention.
FIG. 2E is a schematic structural diagram of the first control module according to a second example in an embodiment of the present invention.
FIG. 2F is a schematic structural diagram of the detection module according to a second example in an embodiment of the present invention.
FIG. 2G is a schematic structural diagram of the third electronic cigarette control device in an embodiment of the present invention.
FIG. 3 is a schematic structural diagram of the fourth electronic cigarette control device in an embodiment of the present invention.

### DETAILED DESCRIPTION OF PREFERRED EMBODIMENTS

In order to make the objectives, technical solutions, and advantages of the present invention much clear, the embodiments of the present invention will be described in further detail below with reference to the accompanying drawings.

Before explaining the embodiments of the present invention in detail, the application scenarios involved in the embodiments of the present invention are described.

The electronic cigarette can, through the atomizer, turn the aerosol-forming substrate into steam for the user to inhale. Therefore, when the user needs to quit smoking, the electronic cigarette can be used instead of paper cigarettes. At present, if the user wants to smoke the electronic cigarette, the user can press the button of the electronic cigarette to light the electronic cigarette, and if the user wants to stop smoking the electronic cigarette, the user can also press the button to stop smoking. However, in the process of controlling the electronic cigarette, whether or not the electronic cigarette is lit by the user is actually controlled manually by the user according to his or her own wishes, causing inconvenient control of the electronic cigarette and low control efficiency. Since the user can smoke the electronic cigarette according to his or her own wishes, it will cause the electronic cigarette to not effectively help the user to quit smoking. To this end, the embodiments of the present invention provide an electronic cigarette control method, which automatically controls the atomizer to stop working when the working state of the atomizer in the electronic cigarette meets a preset condition, so that the user cannot continue to smoke the electronic cigarette. Therefore, not only the automatic control of the electronic cigarette can be realized, the control efficiency can be improved, but also a better smoking cessation effect can be achieved.

FIG. 1A is a flowchart of an electronic cigarette control method according to an embodiment of the present invention. Referring to FIG. 1A, the method is applied to an electronic cigarette, and includes the following steps:
Step 101: when it is detected that the atomizer starts to work, detecting whether the working state of the atomizer meets a preset condition.

When it is detected that the atomizer starts to work, it means that the user may be smoking an electronic cigarette. Therefore, in order to help the user to more effectively quit smoking, when it is detected that the atomizer starts to work, the electronic cigarette can detect whether the working state of the atomizer meets the preset condition.

It should be noted that the atomizer is used to atomize the aerosol-forming substrate in the electronic cigarette. That is, when the atomizer starts to work, the user can smoke the electronic cigarette, and when the atomizer stops working, the user cannot smoke the electronic cigarette. The aerosol-forming substrate may be a substance that can be atomized to form smoke, such as e-liquid, tobacco paste, and shredded tobacco.

In addition, the preset condition can be set in advance, and the preset condition can be a condition indicating that the user has smoked a long time or a number of times. For example, the preset condition can include: the working time of the atomizer reaches a first preset duration, or the number of times the atomizer works within a preset time period is greater than or equal to a preset number of working times.

Furthermore, the first preset duration, the preset time period and the preset number of working times can be set in advance. The first preset duration, the preset time period and the preset number of working times can be set according to actual requirements, which are not limited in the embodiments.

Step 102: if the working state of the atomizer meets the preset condition, controlling the atomizer to stop working.

When the working state of the atomizer meets the preset condition, it means that the user has smoked for a long time or a number of times. Therefore, at this moment, the atomizer can be controlled to stop working, so that the user cannot continue to smoke the electronic cigarette, thereby not only realizing the automatic control of the electronic cigarette and improving the control efficiency, but also enabling the electronic cigarette to effectively help the user to quit smoking.

When the atomizer is controlled to stop working, the atomizer can be stopped working by controlling the electronic cigarette to be turned off. Of course, it is also possible to control only the atomizer to stop working while keeping the electronic cigarette turned on. It is not limited in the embodiments of the present invention.

In actual practice, after controlling the atomizer to stop working through the above step 102, the user may still want to smoke the electronic cigarette, that is, the user may manually light the electronic cigarette. In order to effectively make the electronic cigarette help the user to quit smoking, further, after controlling the atomizer to stop working through the above step 102, when a cigarette lighting instruction is received within a fourth preset duration after the atomizer stops working, the cigarette lighting instruction is directly discarded; or, when a cigarette lighting instruction is received within a fourth preset duration after the atomizer stops working, a smoking cessation prompt message is displayed to ask the user whether to continue smoking, and if a confirmation operation is received based on the smoking cessation prompt message, the atomizer is controlled to start working; or, when a cigarette lighting instruction is received within a fourth preset duration after the atomizer stops working, the cigarette lighting instruction is discarded and a time prompt message is displayed to remind the user to light the electronic cigarette after the atomizer has stopped working for the fourth preset duration.

It should be noted that the cigarette lighting instruction is used to light the electronic cigarette, that is, it is used to control the atomizer to start working. The cigarette lighting instruction can be triggered by the user through by a specific operation, and the specific operation can be a single-click operation, a double-click operation, a voice operation, etc. Of course, the specific operation may also be a pressing operation of the user pressing a button of the electronic cigarette, which is not limited in the embodiments of the present invention.

In addition, if the electronic cigarette discards the cigarette lighting instruction, it means that the electronic cigarette will not respond to the cigarette lighting instruction. In this case, the electronic cigarette will not control the atomizer to start working.

Furthermore, the fourth preset duration can be set in advance. The fourth preset duration can be set relatively long, for example, the fourth preset duration can be 60 minutes, 80 minutes, and the like.

For example, when a cigarette lighting instruction is received within the fourth preset duration after the atomizer stops working, the cigarette lighting instruction may be directly discarded. In this case, the user will not be able to light the electronic cigarette within the fourth preset duration after the atomizer stops working.

For another example, when a cigarette lighting instruction is received within the fourth preset duration after the atomizer stops working, a smoking cessation prompt message as shown in FIG. 1B may be displayed. If the user clicks the "confirm" button in the smoking cessation prompt message, the electronic cigarette will receive a confirmation operation based on the smoking cessation prompt message, and at this case, the electronic cigarette can control the atomizer to start working; if the user clicks the "cancel" button in the smoking cessation prompt message, the electronic cigarette will not receive a confirmation operation based on the smoking cessation prompt message, and at this case, the electronic cigarette discards the cigarette lighting instruction and does not control the atomizer to start working.

For another example, if the fourth preset duration is 80 minutes, when a cigarette lighting instruction is received 60 minutes after the atomizer stops working, the cigarette lighting instruction is discarded and a time prompt message as shown in FIG. 1C is displayed to remind the user to light the electronic cigarette after 20 minutes.

It should be noted that, when preset conditions are different, the implementation manners of step 101 and step 102 are also different. The following describes the different implementation manners of step 101 and step 102 when preset conditions are different.

If the preset condition is that the working time of the atomizer reaches the first preset duration, when it is detected that the atomizer starts to work, step 101 and step 102 may be implemented in any of the following manners 1 to 4.

Manner 1: referring to FIG. ID, step 101 may include the following step 103, and accordingly, step 102 may include the following step 104.

Step 103: detecting whether the working time of the atomizer reaches the first preset duration.

The working time of the atomizer can reflect the current smoking time of the user. By detecting whether the working time of the atomizer reaches the first preset duration, it can achieve the purpose of monitoring whether the current smoking time of the user is relatively long.

Step 104: when the working time of the atomizer reaches the first preset duration, controlling the electronic cigarette to be turned off.

When the working time of the atomizer reaches the first preset duration, it means that the user has smoked for a long time. Therefore, the electronic cigarette can be directly controlled to be turned off to prevent the user from continuing to smoke the electronic cigarette, thus effectively helping the user to quit smoking.

Further, when the working time of the atomizer does not reach the first preset duration, it means that the current smoking time of the user is relatively short. Therefore, the working of the atomizer may not be controlled, and it continues to detect whether the working time of the atomizer reaches the first preset duration.

Manner 2: referring to FIG. IE, step 101 may include the following steps 105 to 106, and accordingly, step 102 may include the following step 107.

Step 105: detecting whether a suction action occurs within a second preset duration after the atomizer starts to work.

It should be noted that a suction action refers to an action of smoking the electronic cigarette by the user, and the suction action can be detected by an airflow sensor in the electronic cigarette. After the atomizer starts to work, it can determine whether the user is smoking the electronic cigarette by determining whether a suction action occurs.

In addition, the second preset duration can be set in advance, and the second preset duration can be shorter than the first preset duration. For example, if the first preset duration is 5 minutes, the second preset duration can be less than 5 minutes, such as 1 minute, half minute, etc.

If no suction action occurs within the second preset duration after the atomizer starts to work, it means that the user has not smoked the electronic cigarette after the atomizer starts to work. In this case, the user may accidentally trigger the working of the atomizer, and the atomizer can be controlled to stop working while keeping the electronic cigarette turned on, to avoid wasting electric power of the electronic cigarette.

If a suction action occurs within the second preset duration after the atomizer starts to work, it means that the user is smoking the electronic cigarette, then the following step 106 is performed to detect whether the working time of the atomizer reaches the first preset duration.

Step 106: if a suction action occurs within the second preset duration after the atomizer starts to work, detecting whether the working time of the atomizer reaches the first preset duration.

For example, if the second preset duration is 1 minute, when it is detected that the atomizer starts to work, if a suction action occurs within 1 minute after the atomizer starts to work, the electronic cigarette can detect whether the working time of the atomizer reaches the first preset duration; if no suction action occurs within 1 minute after the atomizer starts to work, the atomizer is controlled to stop working while keeping the electronic cigarette turned on.

When the working time does not reach the first preset duration, it means that the user's current smoking time is relatively short, and at this time, it can monitor whether the user is still smoking the electronic cigarette by determining whether a suction action occurs. If a suction action occurs, it means that the user is still smoking the electronic cigarette, and it continues to detect whether the working time of the atomizer reaches the first preset duration; if no suction action occurs, it means that the user has stopped smoking the electronic cigarette, so that the atomizer can be controlled to stop working while keeping the electronic cigarette turned on, to avoid wasting electric power of the electronic cigarette.

If the working time reaches the first preset duration, it means that the user's current smoking time is relatively long, and at this time, step 107 can be performed to control the working of the atomizer.

Step 107: if no suction action occurs, controlling the electronic cigarette to be turned off when the working time reaches the first preset duration; if a suction action occurs, determining the time difference between the moment when the atomizer starts to work and the moment when the suction action occurs, and when the working time of the atomizer is greater than or equal to the sum of the first preset duration and the time difference, controlling the electronic cigarette to be turned off.

When the working time of the atomizer reaches the first preset duration, it means that the user's smoking time is relatively long, and at this time, it can monitor whether the user is still smoking the electronic cigarette by determining whether a suction action occurs. If no suction action occurs, it means that the user has stopped smoking the electronic cigarette, then the electronic cigarette can be controlled to be turned off. If a suction action occurs, it means that the user is still smoking the electronic cigarette; in this case, because the moment when the atomizer starts to work may be different from the moment when the user actually smokes the electronic cigarette, therefore, the time difference between the moment when the atomizer starts to work and the moment when the suction action occurs is determined, to realize controlling the electronic cigarette according to the actual smoking time of the user. When the working time of the atomizer is greater than or equal to the sum of the first preset duration and the time difference, it means that the user's actual smoking time reaches the first preset duration, and at this time, the electronic cigarette can be controlled to be turned off.

For example, if the first preset duration is 5 minutes and the working time of the atomizer is 6 minutes, since the working time of 6 minutes is greater than the first preset duration of 5 minutes, it can then determine whether a suction action occurs. If no suction action occurs, the electronic cigarette can be controlled to be turned off. If a suction action occurs, the time difference between the moment when the atomizer starts to work and the moment when the suction action occurs is determined, assuming that the time difference is 2 minutes, because the working time of 8 minutes is greater than the sum (7 minutes) of the first preset duration of 5 minutes and the time difference of 2 minutes, the electronic cigarette can be controlled to be turned off.

It is worth noting that in the manner 2, the time difference between the moment when the atomizer starts to work and the moment when the suction action occurs is added to the first preset duration, and then it is determined whether the working time of the atomizer is greater than or equal to the sum of the first preset duration and the time difference, which can make up the time difference between the moment when the atomizer starts to work and the moment when the suction action occurs, so as to give the user a complete suction experience and control the electronic cigarette more accurately and reasonably.

Manner 3: referring to FIG. IF, step 101 may include the following steps 108 to 109, and accordingly, step 102 may include the following steps 110 to 111.

Step 108: detecting whether the working time of the atomizer reaches the first preset duration.

Step 109: when the working time of the atomizer reaches the first preset duration, detecting whether the number of times the atomizer works within the preset time period is greater than or equal to the preset number of working times.

The number of times the atomizer works within the preset time period can reflect the number of times the user smokes during the preset time period. By detecting whether the number of times the atomizer works within the preset time period is greater than or equal to the preset number of working times, the user can be monitored whether he or she has smoked many times during the preset time period.

If the number of times the atomizer works within the preset time period is greater than or equal to the preset number of working times, it means that the user has smoked many times in the preset time period, and then step 110 may be continued. If the number of times the atomizer works within the preset time period is less than the preset number of working times, it means that the user has smoked fewer times in the preset time period, and then step 111 may be continued.

Step 110: if the number of times the atomizer works within the preset time period is greater than or equal to the preset number of working times, controlling the electronic cigarette to be turned off.

When the number of times the atomizer works within the preset time period is greater than or equal to the preset number of working times, it means that the user has smoked many times in the preset time period. In this case, the electronic cigarette can be controlled to be turned off so that the user cannot continue to smoke, to give the user a better smoking cessation experience.

For example, if the preset time period is 1 day and the preset number of working times is 5, assuming that the working time of the atomizer reaches the first preset duration and the number of times the atomizer works in a day reaches 6 times, because 6 working times is greater than the preset number of 5 working times, the electronic cigarette can be controlled to be turned off.

Optionally, in this embodiment, as an example, step 108 is performed first and then step 109 is performed. In actual implementation, step 108 and step 109 may also be performed simultaneously, or step 109 is performed first and then step 108 is performed. In order to control the electronic cigarette to be turned off, this embodiment only requires that the working time of the electronic cigarette reaches the first preset duration and the number of times the atomizer works within the preset time period reaches the preset number of working times, the actual order of the steps being performed is not limited.

Step 111: if the number of times the atomizer works within the preset time period is less than the preset number of working times, controlling the atomizer to stop working while keeping the electronic cigarette turned on.

When the number of times the atomizer works within the preset time period is less than the preset number of working times, it means that the user smokes less in the preset time period, so at this time, the atomizer can be controlled to stop working while the electronic cigarette is kept turned on. In this case, if the user wants to smoke the electronic cigarette again, there is no need to reopen the electronic cigarette, only the atomizer needs to be started, so as to give the user a better smoking experience.

For example, if the preset time period is 1 day and the preset number of working times is 5, assuming that the working time of the atomizer reaches the first preset duration and the number of times the atomizer works in a day is 3 times, because 3 working times is less than the preset number of 5 working times, the atomizer can be controlled to stop working while the electronic cigarette is kept turned on.

It is worth noting that, before controlling the atomizer to stop working, the manner 4 further determines the number of times the atomizer works within the preset time period. When the number of times the atomizer works within the preset time period reaches the preset number of working times, the electronic cigarette is controlled to be turned off. When the number of times the atomizer works within the preset time period does not reach the preset number of working times, the atomizer is controlled to stop working while keeping the electronic cigarette turned on, so that the electronic cigarette can be controlled more accurately and reasonably, to improve the user's smoking experience while effectively helping the user to quit smoking.

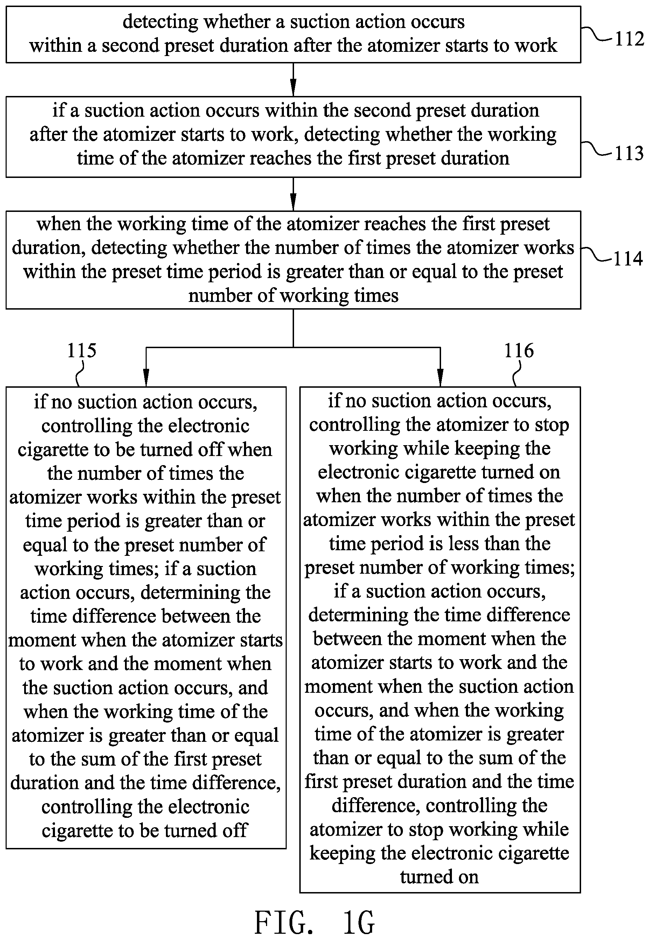

Manner 4: referring to FIG. 1G, step 101 may include the following steps 112 to 113, and accordingly, step 102 may include the following steps 114 to 116.

Step 112: detecting whether a suction action occurs within a second preset duration after the atomizer starts to work.

Step 113: if a suction action occurs within the second preset duration after the atomizer starts to work, detecting whether the working time of the atomizer reaches the first preset duration.

Step 114: when the working time of the atomizer reaches the first preset duration, detecting whether the number of times the atomizer works within the preset time period is greater than or equal to the preset number of working times.

Step 115: if no suction action occurs, controlling the electronic cigarette to be turned off when the number of times the atomizer works within the preset time period is greater than or equal to the preset number of working times; if a suction action occurs, determining the time difference between the moment when the atomizer starts to work and the moment when the suction action occurs, and when the working time of the atomizer is greater than or equal to the sum of the first preset duration and the time difference, controlling the electronic cigarette to be turned off.

Step 116: if no suction action occurs, controlling the atomizer to stop working while keeping the electronic cigarette turned on when the number of times the atomizer works within the preset time period is less than the preset number of working times; if a suction action occurs, determining the time difference between the moment when the atomizer starts to work and the moment when the suction action occurs, and when the working time of the atomizer is greater than or equal to the sum of the first preset duration and the time difference, controlling the atomizer to stop working while keeping the electronic cigarette turned on.

It is worth noting that in manner 4, the working of the atomizer is controlled by combining the suction action, the working time of the atomizer and the number of times the atomizer works, so that the electronic cigarette can be more accurately and reasonably controlled so as to improve the user's smoking experience while effectively helping the user to quit smoking.

When it is detected that the atomizer starts to work, if the preset condition is that the number of times the atomizer works within the preset time period is greater than or equal to the preset number of working times, steps 101 and 102 can be performed in any of the following manners 5-6.

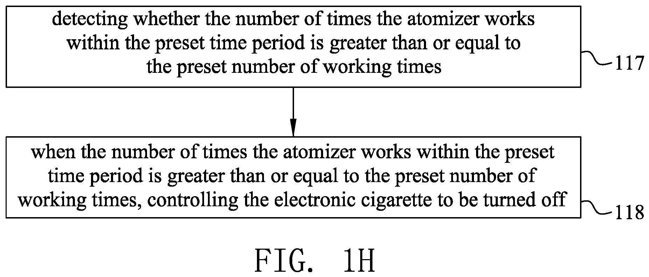

Manner 5: referring to FIG. 1H, step 101 may include the following step 117, and accordingly, step 102 may include the following step 118.

Step 117: detecting whether the number of times the atomizer works within the preset time period is greater than or equal to the preset number of working times.

Step 118: when the number of times the atomizer works within the preset time period is greater than or equal to the preset number of working times, controlling the electronic cigarette to be turned off.

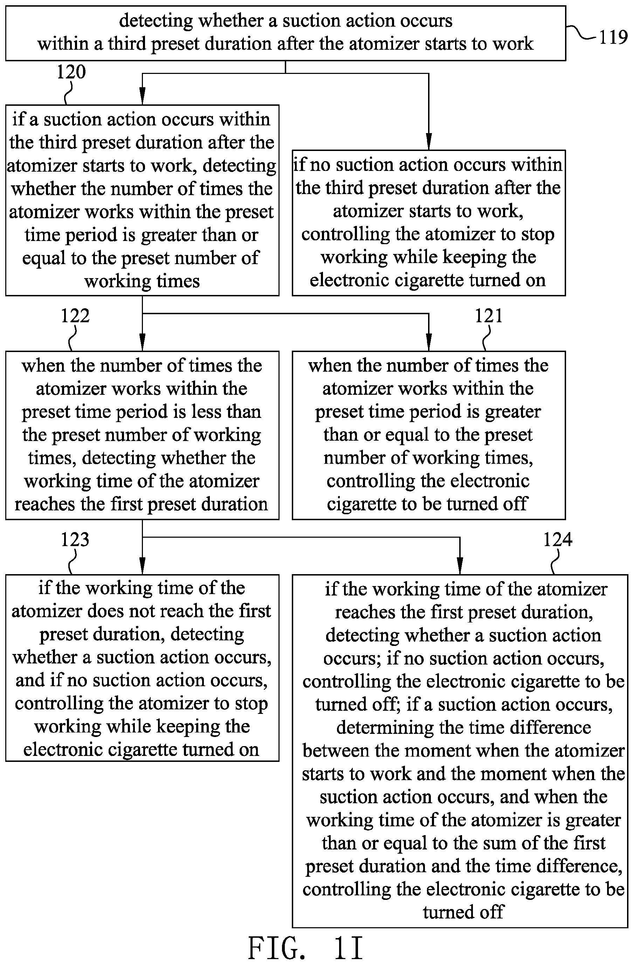

Manner 6: referring to FIG. 1I, step 101 may include the following steps 119 to 120, and accordingly, step 102 may include the following step 121.

Step 119: detecting whether a suction action occurs within a third preset duration after the atomizer starts to work.

If no suction action occurs within the third preset duration after the atomizer starts to work, the atomizer is controlled to stop working while keeping the electronic cigarette turned on.

If a suction action occurs within the third preset duration after the atomizer starts to work, step 120 may be continued.

Step 120: if a suction action occurs within the third preset duration after the atomizer starts to work, detecting whether the number of times the atomizer works within the preset time period is greater than or equal to the preset number of working times.

Step 121: when the number of times the atomizer works within the preset time period is greater than or equal to the preset number of working times, controlling the electronic cigarette to be turned off.

Further, when the number of times the atomizer works within the preset time period is less than the preset number of working times, referring to FIG. 1I, the working of the atomizer can further be controlled through the following steps 122-124.

Step 122: when the number of times the atomizer works within the preset time period is less than the preset number of working times, detecting whether the working time of the atomizer reaches the first preset duration.

It should be noted that the third preset duration may be shorter than the first preset duration. For example, if the first preset duration is 20 minutes, the third preset duration may be 5 minutes, 10 minutes, or the like.

If the working time of the atomizer does not reach the first preset duration, step 123 is performed. If the working time of the atomizer reaches the first preset duration, step 124 is performed.

Step 123: if the working time of the atomizer does not reach the first preset duration, detecting whether a suction action occurs, and if no suction action occurs, controlling the atomizer to stop working while keeping the electronic cigarette turned on.

If a suction action occurs, it means that the user is still smoking the electronic cigarette, and at this time, it can continue to detect whether the working time of the atomizer reaches the first preset duration. If no suction action occurs, it means that the user has stopped smoking the electronic cigarette before the smoking time reaches the first preset duration, so at this time, the atomizer can be controlled to stop working while the electronic cigarette is kept turned on.

Step 124: if the working time of the atomizer reaches the first preset duration, detecting whether a suction action occurs; if no suction action occurs, controlling the electronic cigarette to be turned off; if a suction action occurs, determining the time difference between the moment when the atomizer starts to work and the moment when the suction action occurs, and when the working time of the atomizer is greater than or equal to the sum of the first preset duration and the time difference, controlling the electronic cigarette to be turned off.

In the embodiments of the present invention, when it is detected that the atomizer starts to work, it means that the user is going to smoke the electronic cigarette. Therefore, by detecting whether the working state of the atomizer meets a preset condition, it can monitor whether the user has smoked for a long time or a number of times. When the working state of the atomizer meets the preset condition, it means that the user has smoked for a long time or a number of times. Therefore, the atomizer can be controlled to stop working to prevent the user from continuing to smoke the electronic cigarette, so that not only the automatic control of the electronic cigarette is realized and the control efficiency is improved, but also the electronic cigarette can effectively help the user to quit smoking. In addition, in the embodiments of the present invention, the working time of the atomizer can be combined with at least one of the suction action and the number of times the atomizer works to control the working of the atomizer, so that the electronic cigarette can be more accurately and reasonably controlled to improve the user's smoking experience while effectively helping the user to quit smoking.

After the electronic cigarette control method provided by the embodiments of the present invention is explained in detail through the embodiments shown in FIG. 1A to FIG. 1H, an electronic cigarette control device provided by the embodiments of the present invention is described hereinafter.

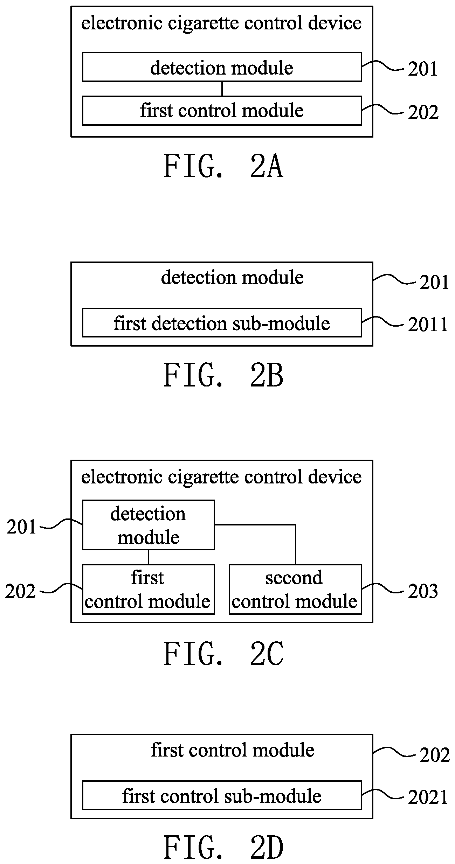

FIG. 2A is a schematic structural diagram of an electronic cigarette control device according to an embodiment of the present invention. Referring to FIG. 2A, the device includes a detection module 201 and a first control module 202.

The detection module 201 is configured to detect whether the working state of the atomizer meets a preset condition when it is detected that the atomizer starts to work; the atomizer is used to atomize an aerosol-forming substrate in an electronic cigarette, and the preset condition includes: the working time of the atomizer reaches a first preset duration, or the number of times the atomizer works within a preset time period is greater than or equal to a preset number of working times.

The first control module 202 is configured to control the atomizer to stop working if the working state of the atomizer meets the preset condition.

Optionally, referring to FIG. 2B, the preset condition includes that the working time of the atomizer reaches the first preset duration; and the detection module 201 includes:
a first detection sub-module 2011, configured to detect whether the working time of the atomizer reaches the first preset duration when a suction action occurs within a second preset duration after the atomizer starts to work. The second preset duration is shorter than the first preset duration.

Optionally, referring to FIG. 2C, the device further includes:
a second control module 203, configured to, when the working time of the atomizer does not reach the first preset duration, control the atomizer to stop working while keeping the electronic cigarette turned on if no suction action occurs.

Optionally, referring to FIG. 2D, the preset condition includes that the working time of the atomizer reaches the first preset duration; and the first control module 202 includes:
a first control sub-module 2021, configured to: if no suction action occurs, control the electronic cigarette to be turned off when the working time of the atomizer reaches the first preset duration; if a suction action occurs, determine the time difference between the moment when the atomizer starts to work and the moment when the suction action occurs, and when the working time of the atomizer is greater than or equal to the sum of the first preset duration and the time difference, control the electronic cigarette to be turned off.

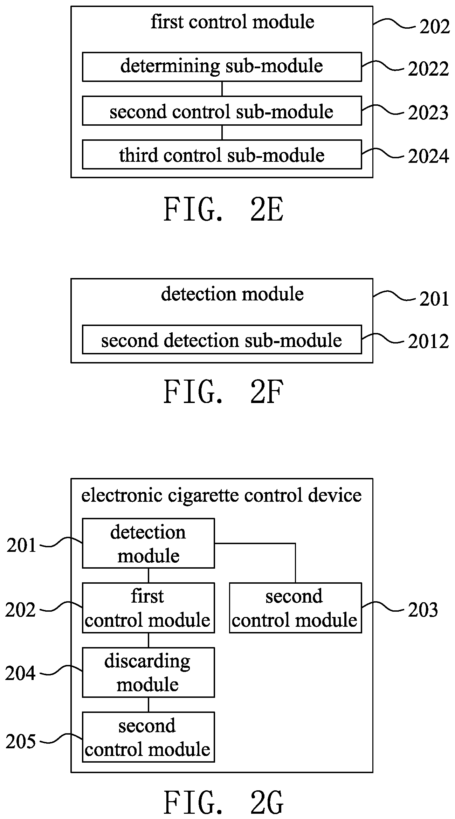

Optionally, referring to FIG. 2E, the preset condition includes that the working time of the atomizer reaches the first preset duration; and the first control module 202 includes:
a determining sub-module 2022, configured to determine the number of times the atomizer works within the preset time period when the working time reaches the first preset duration;
a second control sub-module 2023, configured to control the electronic cigarette to be turned off when the number of times the atomizer works is greater than or equal to the preset number of working times; and
a third control sub-module 2024, configured to control the atomizer to stop working while keeping the electronic cigarette turned on when the number of times the atomizer works is less than the preset number of working times.

Optionally, referring to FIG. 2F, the preset condition includes that the number of times the atomizer works within a preset time period is greater than or equal to a preset number of working times; and the detection module 201 includes:
a second detection sub-module 2012, configured to, when a suction action occurs within a third preset duration after the atomizer starts to work, detect whether the number of times the atomizer works within the preset time period is greater than or equal to the preset number of working times.

Optionally, referring to FIG. 2G, the device further includes:
a discarding module 204, configured to discard the cigarette lighting instruction when a cigarette lighting instruction is received within a fourth preset duration after the atomizer stops working; or,
a second control module 205, configured to display a smoking cessation prompt message when a cigarette lighting instruction is received within a fourth preset duration after the atomizer stops working, and control the atomizer to start work when a confirmation operation is received based on the smoking cessation prompt message.

In the embodiments of the present invention, when it is detected that the atomizer starts to work, it means that the user is going to smoke the electronic cigarette. Therefore, by detecting whether the working state of the atomizer meets a preset condition, it can monitor whether the user has smoked for a long time or a number of times. When the working state of the atomizer meets the preset condition, it means that the user has smoked for a long time or a number of times. Therefore, the atomizer can be controlled to stop working to prevent the user from continuing to smoke the electronic cigarette, so that not only the automatic control of the electronic cigarette is realized and the control efficiency is improved, but also the electronic cigarette can effectively help the user to quit smoking. In addition, in the embodiments of the present invention, the working time of the atomizer can be combined with at least one of the suction action and the number of times the atomizer works to control the working of the atomizer, so that the electronic cigarette can be more accurately and reasonably controlled to improve the user's smoking experience while effectively helping the user to quit smoking.

It should be noted that the electronic cigarette control device provided in the above-mentioned embodiment is described by taking only the division of the above functional modules as an example. In practice, the above functions may be allocated by different functional modules according to needs, that is, the internal structure of the control device is divided into different functional modules to realize all or part of the functions described above. In addition, the electronic cigarette control device and the electronic cigarette control method provided in the foregoing embodiments belong to the same concept, and the specific implementation of the control device can refer to the method embodiment, and details are not described herein again.

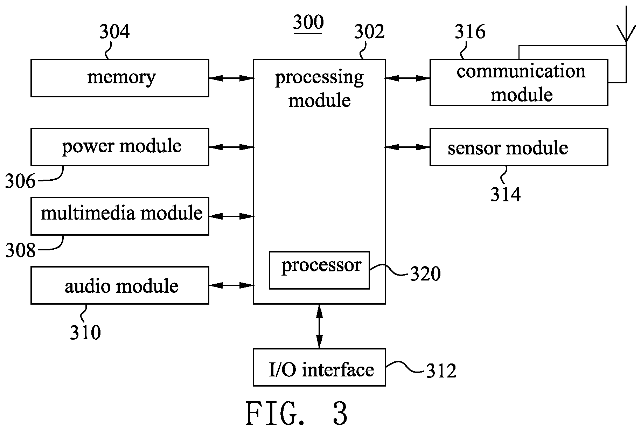

FIG. 3 is a schematic structural diagram of an electronic cigarette control device 300 according to an embodiment of the present invention. For example, the device 300 may be an electronic cigarette.

Referring to FIG. 3, the device 300 may include one or more of the following modules: a processing module 302, a memory 304, a power module 306, a multimedia module 308, an audio module 310, an input/output (I/O) interface 312, a sensor module 314, and a communication module 316.

The processing module 302 generally controls the overall operations of the device 300, such as operations associated with display, telephone calls, data communications, camera operations, and recording operations. The processing module 302 may include one or more processors 320 to execute instructions to realize all or part of the steps of the method described above. In addition, the processing module 302 may include one or more modules to facilitate the interaction between the processing module 302 and other modules. For example, the processing module 302 may include an interaction module to facilitate the interaction between the multimedia module 308 and the processing module 302.

The memory 304 is configured to store various types of data to support operation at the device 300. Examples of such data include instructions for any application or method operation on the device 300, contact data, phone book data, messages, pictures, videos, and the like. The memory 304 may be implemented by any type of volatile or non-volatile storage device or a combination thereof, such as static random access memory (SRAM), electrically erasable programmable read-only memory (EEPROM), programming read-only memory (EPROM), programmable read-only memory (PROM), read-only memory (ROM), magnetic memory, flash memory, magnetic disk or optical disk.

The power module 306 provides power to the various modules of the device 300. The power module 306 may include a power management system, one or more power sources, and other units associated with generating, managing, and distributing power for the device 300.

The multimedia module 308 includes a screen that provides an output interface between the device 300 and a user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, slide, and gestures on the touch panel. The touch sensor may not only sense the boundary of a touch or a slide action, but also detect the duration and the pressure related to the touch or the slide operation. In some embodiments, the multimedia module 308 includes a front camera and/or a rear camera. When the device 300 is in an operation mode, such as a shooting mode or a video mode, the front camera and/or the rear camera can receive external multimedia data. Each of the front camera and the rear camera can be a fixed optical lens system or has optical zoom capability.

The audio module 310 is configured to output and/or input audio signals. For example, the audio module 310 includes a microphone (MIC) that is configured to receive external audio signals when the device 300 is in an operation mode, such as a call mode, a recording mode, and a voice recognition mode. The received audio signals may be further stored in the memory 304 or transmitted via the communication module 316. In some embodiments, the audio module 310 further includes a speaker for outputting audio signals.

The I/O interface 312 provides an interface between the processing module 302 and a related peripheral interface module. The related peripheral interface module may be a keyboard, a click wheel, buttons, or the like. These buttons can include, but are not limited to, a home button, a volume button, a start button, and a lock button.

The sensor module 314 includes one or more sensors for providing status assessments of various aspects of the device 300. For example, the sensor module 314 can detect the on/off state of the device 300, and the relative positioning of some units such as the display device and the keypad of the device 300. The sensor module 314 can also detect the change in the position of the device 300 or a module of the device 300, the presence or absence of the user's contact with the device 300, the orientation or acceleration/deceleration of the device 300, or the temperature change of the device 300. The sensor module 314 may include a proximity sensor configured to detect the presence of nearby objects without any physical contact. The sensor module 314 may also include a light sensor, such as a CMOS or CCD image sensor, for use in imaging applications. In some embodiments, the sensor module 314 may further include an acceleration sensor, a gyroscope sensor, a magnetic sensor, a pressure sensor, or a temperature sensor.

The communication module 316 is configured to facilitate wired or wireless communication between the device 300 and other devices. The device 300 may access a wireless network based on a communication standard, such as WiFi, 2G, or 3G, or a combination thereof. In an exemplary embodiment, the communication module 316 receives a broadcast signal from an external broadcast management system or broadcasts related information via a broadcast channel. In an exemplary embodiment, the communication module 316 further includes a near field communication (NFC) module to facilitate short-range communication. For example, the NFC module can be implemented based on radio frequency identification (RFID) technology, infrared data association (IrDA) technology, ultra wideband (UWB) technology, Bluetooth (BT) technology, and other technologies.

In an exemplary embodiment, the apparatus 300 may be realized by one or more application-specific integrated circuit (ASIC), digital signal processor (DSP), digital signal processing device (DSPD), programmable logic device (PLD), field programmable gate array (FPGA), controller, microcontroller, microprocessor, or other electronic components, to execute the electronic cigarette control method provided in the embodiment of FIG. 1A.

In the above embodiments, it may be implemented in whole or in part by software, hardware, firmware, or any combination thereof. When implemented in software, it may be implemented in whole or in part in the form of a computer program. The computer program includes one or more computer instructions. When the computer instructions are loaded and executed on a computer, the processes or functions according to the embodiments of the present invention are wholly or partially generated. The computer may be a general-purpose computer, a special-purpose computer, a computer network, or other programmable devices. The computer instructions may be stored in a computer-readable storage medium, or transmitted from one computer-readable storage medium to another computer-readable storage medium, for example, the computer instructions may be transmitted from a website site, a computer, a server, or a data center to another website site, computer, server or data center through wired (e.g., coaxial cable, optical fiber, digital subscriber line (DSL)) or wireless (e.g., infrared, wireless, microwave). The computer-readable storage medium may be any available medium that can be accessed by a computer or a data storage device such as a server, a data center, or the like that is integrated by one or more available mediums. The available medium may be a magnetic medium (e.g., a floppy disk, a hard disk, a magnetic tape), an optical medium (e.g., a digital versatile disc (DVD)), or a semiconductor medium (e.g., a solid state disk (SSD)).

The above are only preferred embodiments of the present invention and are not intended to limit the present invention. Any modification, equivalent replacement, or improvement made within the principle of the present invention shall be included in the protection scope of the present invention.

## Claims

1. An electronic cigarette control method applied to an electronic cigarette, the method comprising:
when it is detected that an atomizer starts to work, detecting whether the working state of the atomizer meets a preset condition, wherein the atomizer is configured to atomize an aerosol-forming substrate in the electronic cigarette, and the preset condition includes: the working time of the atomizer reaches a first preset duration, or the number of times the atomizer works within a preset time period is greater than or equal to a preset number of working times; and
if the working state of the atomizer meets the preset condition, controlling the atomizer to stop working.

2. The method according to claim **1,** wherein the preset condition includes that the working time of the atomizer reaches the first preset duration; and detecting whether the working state of the atomizer meets the preset condition comprises:
detect whether the working time of the atomizer reaches the first preset duration when a suction action occurs within a second preset duration after the atomizer starts to work, wherein the second preset duration is shorter than the first preset duration.

3. The method according to claim **2,** wherein after detecting whether the working time of the atomizer reaches the first preset duration, the method further comprises:
when the working time of the atomizer does not reach the first preset duration, controlling the atomizer to stop working while keeping the electronic cigarette turned on if no suction action occurs.

4. The method according to claim **2,** wherein if the working state of the atomizer meets the preset condition, controlling the atomizer to stop working comprises:
if no suction action occurs, controlling the electronic cigarette to be turned off when the working time of the atomizer reaches the first preset duration; and
if a suction action occurs, determining the time difference between the moment when the atomizer starts to work and the moment when the suction action occurs, and when the working time of the atomizer is greater than or equal to the sum of the first preset duration and the time difference, controlling the electronic cigarette to be turned off.

5. The method according to claim **1,** wherein the preset condition includes that the working time of the atomizer reaches the first preset duration; and if the working state of the atomizer meets the preset condition, controlling the atomizer to stop working comprises:
determining the number of times the atomizer works within a preset time period when the working time reaches the first preset duration;
controlling the electronic cigarette to be turned off when the number of times the atomizer works is greater than or equal to a preset number of working times; and
controlling the atomizer to stop working while keeping the electronic cigarette turned on when the number of times the atomizer works is less than the preset number of working times.

6. The method according to claim **1,** wherein the preset condition includes that the number of times the atomizer works within the preset time period is greater than or equal to the preset number of working times; and detecting the whether the working state meets the preset condition comprises:
when a suction action occurs within a third preset duration after the atomizer starts to work, detecting whether the number of times the atomizer works within the preset time period is greater than or equal to the preset number of working times.

7. The method according to any one of claims **1** to **6,** wherein after controlling the atomizer to stop working, the method further comprises:
discarding the cigarette lighting instruction when a cigarette lighting instruction is received within a fourth preset duration after the atomizer stops working; or
displaying a smoking cessation prompt message when a cigarette lighting instruction is received within a fourth preset duration after the atomizer stops working, and controlling the atomizer to start work when a confirmation operation is received based on the smoking cessation prompt message.

8. An electronic cigarette control device applied to an electronic cigarette, the device comprising:
a detection module, configured to detect whether the working state of the atomizer meets a preset condition when it is detected that the atomizer starts to work, wherein the atomizer is used to atomize an aerosol-forming substrate in the electronic cigarette, and the preset condition includes: the working time of the atomizer reaches a first preset duration, or the number of times the atomizer works within a preset time period is greater than or equal to a preset number of working times; and
a first control module, configured to control the atomizer to stop working if the working state of the atomizer meets the preset condition.

9. The device according to claim **8,** wherein the preset condition includes that the working time of the atomizer reaches the first preset duration; and the detection module comprises:
a first detection sub-module, configured to detect whether the working time of the atomizer reaches the first preset duration when a suction action occurs within a second preset duration after the atomizer starts to work, wherein the second preset duration is shorter than the first preset duration.

10. The device according to claim **9,** further comprising:
a second control module, configured to, when the working time of the atomizer does not reach the first preset duration, control the atomizer to stop working while keeping the electronic cigarette turned on if no suction action occurs.

11. The device according to claim **9,** wherein the preset condition includes that the working time of the atomizer reaches the first preset duration; and the first control module comprises:
a first control sub-module, configured to: if no suction action occurs, control the electronic cigarette to be turned off when the working time of the atomizer reaches the first preset duration; if a suction action occurs, determine the time difference between the moment when the atomizer starts to work and the moment when the suction action occurs, and when the working time of the atomizer is greater than or equal to the sum of the first preset duration and the time difference, control the electronic cigarette to be turned off.

12. The device according to claim **8,** wherein the preset condition includes that the working time of the atomizer reaches the first preset duration; and the first control module comprises:
a determining sub-module, configured to determine the number of times the atomizer works within the preset time period when the working time reaches the first preset duration;
a second control sub-module, configured to control the electronic cigarette to be turned off when the number of times the atomizer works is greater than or equal to the preset number of working times; and
a third control sub-module, configured to control the atomizer to stop working while keeping the electronic cigarette turned on when the number of times the atomizer works is less than the preset number of working times.

13. The device according to claim **8,** wherein the preset condition includes that the number of times the atomizer works within the preset time period is greater than or equal to the preset number of working times; and the detection module comprises:
a second detection sub-module, configured to, when a suction action occurs within a third preset duration after the atomizer starts to work, detect whether the number of times the atomizer works within the preset time period is greater than or equal to the preset number of working times.

14. The device according to any one of claims **8** to **13,** further comprising:
a discarding module, configured to discard the cigarette lighting instruction when a cigarette lighting instruction is received within a fourth preset duration after the atomizer stops working; or
a third control module, configured to display a smoking cessation prompt message when a cigarette lighting instruction is received within a fourth preset duration after the atomizer stops working, and control the atomizer to start work when a confirmation operation is received based on the smoking cessation prompt message.

15. An electronic cigarette, comprising the electronic cigarette control device according to any one of claims **8** to **14.**
